# EUROPEAN PATENT SPECIFICATION

(11) **EP 1 494 939 B1**
(45) Date of publication and mention of the grant of the patent: **22.07.2009**
(21) Application number: 03743792.8
(22) Date of filing: 13.03.2003
(51) Int. Cl.: B65D 83/06, A47J 31/40, A47G 19/34

(54) **DISPENSING DEVICE**
ABGABEVORRICHTUNG
DISTRIBUTEUR

(30) Priority: 13.03.2002 DK 200200382
(43) Date of publication of application: 12.01.2005
(73) Proprietor: Logidos ApS, 6200 Aabenraa (DK)
(72) Inventor: NIELSEN, Keld, Krogh, 6300 Grasten (DK); NIELSEN, Svend, Erik, Lund, 6340 Krusa (DK)
(74) Representative: Inspicos A/S
(86) International application number: PCT/DK2003/000160
(87) International publication number: WO 2003/076304

(56) References cited:
- WO-A-02/064006
- US-A- 5 386 929
- US-A- 5 480 071

## Description

The present invention relates to a combination of a dispensing device for batch dispensing granular material such as ground coffee, freeze-dried instant coffee or tea, sugar, detergent powder and the like and a hand-held container for the granular product having a top portion and a bottom portion.

Many combinations of a storage container and a dispensing device are known in the art, but all such known combinations are complicated as regards use and/or constructive elements.

In connection with dispensing of instant coffee powder, ground coffee, detergent powder and the like, the normal procedure is to open a container thereof and remove a batch either with a spoon or by pouring. This is an imprecise and often messy procedure. Furthermore, the repeated opening of the storage container in connection with each dispensing operation gives rise to deterioration of those granular products that lose aroma or are oxidized by contact with the oxygen in the atmosphere.

Therefore, there is a need for a simple and inexpensive combination of a storage container and a dispensing device for granular product that may be operated by any person and protects the contents of the container against deterioration by loss of aroma or oxidation by limiting the contact with the atmosphere. The batchwise dispensing should also be relatively precise and uniform so that it is ensured that the desired total amount of product dispensed is achieved without having to resort to further measuring actions.

US 5,480,071 discloses a measuring and dispensing device for granular or powdered products in which a tubular body is sleevable within the neck of the product container and is closed by a cap having a lid portion. The tubular body has a divider in the form of a diaphragm which defines a measuring chamber which communicates with the interior of the container and a collecting chamber which communicates with the measuring chamber and an outlet duct.

According to the invention there is provided a dispensing device for batch dispensing granular material such as ground coffee, freeze-dried instant coffee, sugar, detergent powder and the like from a hand-held container, the dispensing device being adapted for being inserted inside the neck of a container, the dispensing device comprising:
- a top wall,
- an outlet barrier wall projecting from the top wall, and
- a sloping inlet barrier wall, together defining inlet and outlet apertures,
characterised in that the dispensing device comprises a first engagement portion and a second engagement portion, each engagement portion providing engagement between the dispensing device and the inside of the neck of the container, the first engagement portion and the second engagement portion extending from the top wall at diametrically disposed positions near the rim of the top wall.

Hereby, an intuitively easily understandable and easily implementable pouring motion will entail dispensing of relatively uniformly sized batches of the granular material without having to access the interior of the container and without any substantial risk of spilling material.

A passage extends in said material flow direction between and along two opposed side walls, a top wall and a bottom wall past said inlet and outlet barrier wall extending transversely to said flow direction from one side wall to the other side wall, said inlet barrier wall extending from said bottom wall part way across said passage towards said top wall such that said inlet barrier aperture is defined between the free edge of said inlet barrier wall and said top wall, and said outlet barrier wall extending from said top wall part way across said passage towards said bottom wall such that said outlet barrier aperture is defined between the free edge of said outlet barrier wall and said bottom wall.

Attachment means are adapted for hermetically sealing the interface between said container and said dispensing device. Hereby, it is ensured that no atmospheric air containing moisture may enter into the container past this interface.

In one embodiment of a combination , a closure means is provided for closing said material outlet and said closure means is provided with sealing means for cooperating with corresponding sealing means of said material outlet for hermetically sealing said material outlet. Hereby, it is further ensured that no atmospheric air containing moisture may enter into the container past this closure and no aroma is lost when dispensing is not taking place and the aperture is closed.

Preferably, said material outlet has an oval or elliptical shape, and said closure means is a lid hingedly connected to said dispensing device.

Advantageously, said container is a standard jar having a circular cylindrical neck portion provided with screw threads, and said body has a circular cylindrical body portion matching said neck portion and provided with engagement means for engaging said screw threads for screwing said device on to said neck portion, and a sealing gasket is provided between said neck portion and said body portion.

In one embodiment, said bottom wall is constituted by a separate plate of resilient material such as plastic foam abutting an annular shoulder of said body portion along the periphery of said plate such that said periphery is clamped between the rim of said neck portion and said shoulder when the dispensing device is screwed on said neck portion. Hereby the manufacture of the dispensing device is faciitated in manner also having the advantage of providing an efficient hermetical seal between the device and the container.

In the not claimed embodiment of a dispensing device said first transverse wall extends from said bottom wall part way across said passage towards said top wall such that said material inlet aperture is defined between the free edge of said first transverse wall and said top wall, and said second transverse wall extending from said top wall part way across said passage towards said bottom wall such that said material outlet aperture is defined between the free edge of said second transverse wall and said bottom wall.

Preferably, a closure means is provided for closing said material outlet opening, and said closure means is provided with sealing means for cooperating with corresponding sealing means of said material outlet for hermetically sealing said material outlet opening.

Advantageously, said material outlet opening has an oval or elliptical shape, and said closure means is a lid hingedly connected to said dispensing device.

Preferably, said lid on one surface thereof is provided with a resilient sealing gasket for sealingly engaging the edge of said material outlet opening.

In one embodiment of a dispensing device according to the invention, said bottom wall is provided with said material inlet opening and said top wall is provided with said material inlet opening aperture.

Advantageously, said top wall is constituted by a separate plate of resilient material such as plastic foam abutting a shoulder of said body along the periphery of said plate.

In connection with containers suited for attaching the dispensing device to the inner surface of the wall of the container, said top wall may be removed such that the resulting free edges of said two side walls and said second transverse wall may be attached to said interior surface of a wall of a container.

In the following, the invention will be explained more in detail in connection with different embodiments of the combination and the dispensing device according to the invention shown, solely by way of example, in the accompanying drawings where
Fig. 1 is a schematic top perspective view of a not claimed embodiment of a dispensing device according to the invention,
Fig. 2 is a schematic bottom perspective view of the device in Fig. 1,
Fig. 3 is a schematic top view of the device in Fig. 1,
Figs. 4 and 5 are schematic sectional views of the device in Fig 3 taken along lines A-A and B-B, respectively,
Figs. 6-9 are two schematic cross sectional views, a schematic top view and a schematic perspective view respectively, of a combination of a container and the claimed dispensing device according to the invention, the cross sectional views of Figs. 6 and 7 being taken along lines A-A and B-B, respectively, in Fig. 8, and
Figs. 10-11 are schematic perspective views seen in mutually substantially opposite directions of a dispensing device according to the invention suitable for, inter alia, being incorporated in the combination shown in Figs. 6-9,
Fig. 12 is a schematic frontal, elevation view of the dispensing device of Figs. 10-11

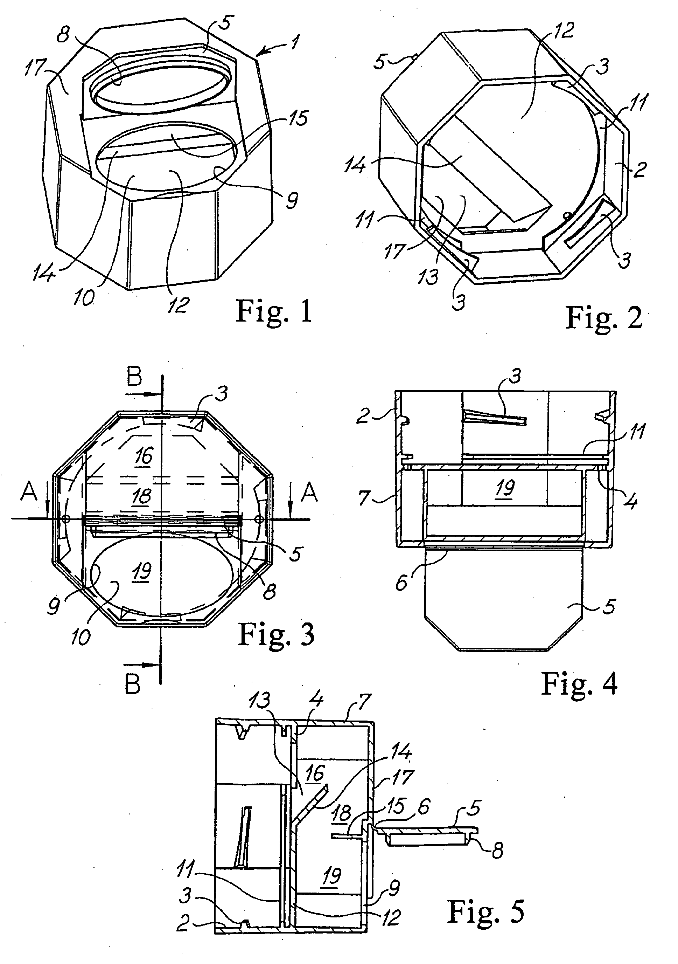

Referring now to Figs. 1-5, a dispensing device 1 intended for being screwed on to the neck of a not shown jar containing granular material such as, for Instance, instant coffee or instant tea, has a bottom portion 2 for receiving said neck with projections 3 engaging a screw thread on the outer surface of said neck such that the dispensing device 1 functions as a closure of the jar by obstructing the open mouth thereof.

A lid 5 pivotably connected by a hinge 6 to a top portion 7 of the device 1 is provided with a resilient oval sealing gasket or ridge 8 for sealingly engaging an edge or rim 9 of an oval dispensing aperture 10 such that the gasket 8 totally prevents air from entering the jar when the lid 5 closes the aperture 10.

An annular sealing shoulder 4 is provided for abutment of an annular sealing gasket (not shown) to be pressed between said shoulder 4 and the rim of the jar mouth so as to seal the jar mouth from the surrounding atmosphere in a well known manner. An interrupted annular shoulder 11 is provided to retain the annular gasket in place between shoulder 11 and shoulder 4.

The annular sealing shoulder 4 forms part of a bottom wall 12 dividing the device 1 into bottom portion 2 and top portion 7. An aperture 13 in said bottom wall 12 communicates the interior of the bottom portion 2 and thereby the interior of the jar with the interior of the top portion 7.

A sloping inlet barrier wall 14 extends from the bottom wall 12 into the interior of top portion 7 and defines an inlet chamber 16 between the wall 14 and the outer wall of the top portion 7. An outlet barrier wall 15 projects into the interior of the top portion 7 from the top wall 17 of the device 1 and together with inlet barrier wall 14 defines a barrier or overflow chamber 18, and outlet barrier wall 15 defines an outlet chamber 19 together with exterior wall of top portion 7.

An inlet barrier aperture between inlet chamber 16 and barrier chamber18 is defined between the free edge of the inlet barrier wall 14 and the top wall 17, and an outlet barrier aperture between barrier chamber 18 and outlet chamber 19 is defined between the free edge of outlet barrier wall 15 and the bottom wall 12.

In use, when dispensing granular material from the interior of the jar, the jar is inverted so that the mouth of the jar and the top wall 17 of the device 1 face generally downwards. In this inverted position of the jar, granular material will flow through the aperture 13 into the chamber 16 and further into the barrier chamber 18 via said inlet barrier aperture until being stopped by the outlet barrier wall 15.

The jar is then rotated so that the mouth of the jar and the top wall 17 are facing generally upwards. Hereby, part of the granular material in the chamber 16 will flow back through the aperture 13 into the jar and the other part will be prevented from doing so by inlet barrier wall 14 and this other part will flow into the barrier chamber 18 and the outlet chamber 19.

When the jar thereafter is inverted once again, most of the material in chamber 18 and practically all the material in chamber 19 flows out through the dispensing aperture 10 while a new portion of material enters chamber 16 and overflows into chamber18 through said inlet aperture.

The granular material in the jar will thus be dispensed in substantially uniform portions for each time the jar is returned to a generally upright position and thereafter inverted to a generally upside down position.

Some granular materials such as instant coffee are hygroscopic and therefore such granular material in the jar should be prevented from contact with the surrounding atmospheric air containing moisture whenever dispensing is not taking place.

It is therefore important that the sealing gaskets between the dispensing device 1 and the jar and between the lid 5 and the dispensing aperture edge 9 are hermetically tight when the dispensing device 1 is screwed tightly on the neck of the jar and the lid 5 closes the dispensing aperture 10 with the gasket 8 sealingly engaging the aperture edge 9.

For manufacturing reasons, the bottom wall 12 with the aperture 13 and the sloping wall 14 may be configured as a separate element. Said element may be made of a resilient foam-like plastic material such that the wall 12 may be inserted against a not shown internal annular shoulder of the device such that the circumferential edge or periphery of the wall 12 may function as a sealing gasket between the jar mouth rim and the dispensing device 1.

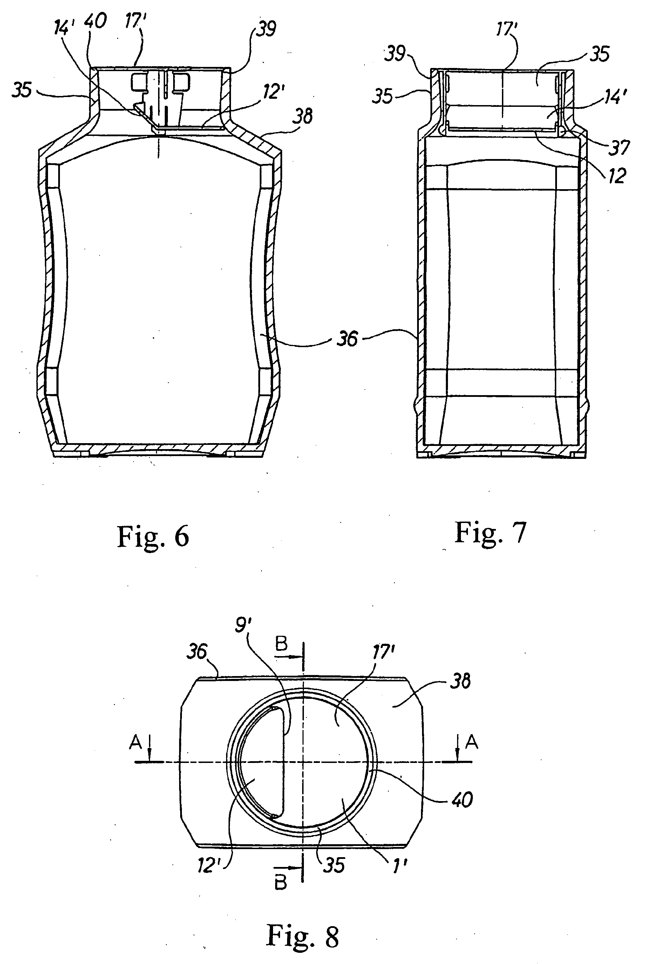

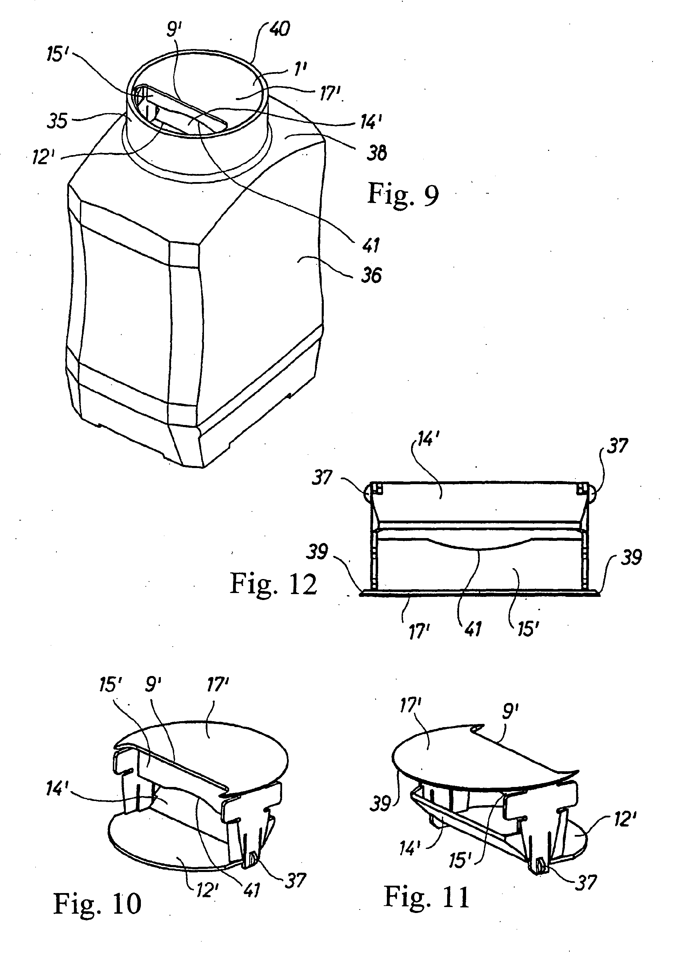

Referring now to Figs 6-11, a dispensing device 1' according to the invention very similar to the dispensing device 1 in Figs. 1-5 is adapted for being inserted inside the neck 35 of a container 36 for storing and dispensing of, for instance, particles of freeze-dried coffee or freeze-dried tea. Thus, by placing the dispensing device 1' inside the neck 35 of said container 36 a currently preferred combination of a container with a neck and a dispensing device according to the invention is provided where a normal closure cap can ensure isolation of the particles from the atmosphere when no dispensing of granular material is taking place. The closure cap (not shown) may be screwed on to not shown external threads on the neck 35 or it may fit tightly and resiliently over the neck 35.

The dispensing device 1' is held removably in place inside the neck 35 by engagement portions with knobs or projections 37 that are dimensioned and located to engage the top portion of the shoulder 38 of the container or jar 36 (see Fig. 7) while an oblique edge 39 of bottom wall 12' rests on the rim 40 of the neck such that the top surface of the top wall 17 of the device is flush with or slightly below the rim 40 such that a not shown metal foil may be adhered to the rim for protecting the contents of the jar from contact with the atmosphere during storage of the jar prior to being opened for dispensing the first dose of material from the jar 35 in a manner well known in this type of container.

The device 1' may alternatively be made of a resilient material with good friction properties relative to the interior surface of the neck 35. If the neck 35 is of glass the material of the device 1' may be a mixture of approx. 80% PP and approx. 20% SEBS. In such case the knobs 37 may be eliminated. This frictional engagement between the device 1' and the inner surface of the neck 35 allows the 70p wall to be placed 1-2 mm below the rim 40 without having the oblique edge 39.

A sloping inlet barrier wall 14' extends from the bottom wall 12', and an inlet chamber is defined between the walls 14' and the inner surface of the neck 35. An outlet barrier wall 15' projects from the top wall 17' of the device 1' and together with inlet barrier wall 14' defines a barrier or overflow chamber, and outlet barrier wall 15' and bottom wall 12' define an outlet chamber together with interior surface of the neck 35.

An inlet barrier aperture between the inlet chamber and the barrier chamber is defined between the free edge of the inlet barrier wall 14' and the top wall 17', and an outlet barrier aperture between the barrier chamber and the outlet chamber is defined between the free edge of outlet barrier wall 15' and the bottom wall 12'.

The free edge of the outlet barrier wall 15' is provided with a shallow indentation, depression or recess 41 increasing the size of the outlet barrier aperture in the region of the indentation 41.

In use, when dispensing granular material from the interior of the jar 36, the jar is inverted so that the mouth of the jar and the top wall 17' of the device 1' face generally downwards. In this inverted position of the jar, granular material will flow into the inlet chamber and further into the barrier chamber via said inlet barrier aperture until being stopped by the outlet barrier wall 15'.

The jar 36 is then rotated so that the mouth of the jar and the top wall 17' are facing generally upwards. Hereby, part of the granular material in the inlet chamber will flow back through the inlet aperture into the jar, and the other part will be prevented from doing so by inlet barrier wall 14'. This other part will flow into the barrier chamber and the outlet chamber.

When the jar 36 thereafter is inverted once again, most of the material in the barrier chamber and practically all the material in the outlet chamber will flow out through the dispensing aperture 9' while a new portion of material enters the inlet chamber and overflows into the barrier chamber through said inlet aperture.

The granular material in the jar 36 will thus be dispensed in substantially uniform portions for each time the jar is returned to a generally upright position and thereafter inverted to a generally upside down position.

The horizontal axis around which the jar 36 is inverted and righted should be generally parallel to the plane of the outlet barrier wall 15'.

If an additional portion of granular material smaller than a full portion is desired, the jar 36 may be held in a halfway inverted position and rotated 45 degrees around a vertical axis with respect to the usual inverting orientation whereby granulate material may flow past the outlet barrier wall 15' through the indentation 41.

In the foregoing top and bottom portions of the containers have been used for reference indicating that the container is to be inverted and righted with the top portion below and above, respectively, the bottom portion. It should be understood that top portion and bottom portion may indicate portions of the container relatively remote from each other and not necessarily portions which are top and bottom when the container is in its natural or normal storage position.

## Claims

1. A dispensing device (1') for batch dispensing granular material such as ground coffee, freeze-dried instant coffee, sugar, detergent powder and the like from a hand-held container (36), the dispensing device (1') being adapted for being inserted inside the neck (35) of a container (36), the dispensing device (1') comprising:
- a top wall (17'),
- an outlet barrier wall (15') projecting from the top wall (17'), and
- a sloping inlet barrier wall (14'), together defining inlet and outlet apertures,
**characterised in that** the dispensing device (1') comprises a first engagement portion and a second engagement portion, each engagement portion providing engagement between the dispensing device (1') and the inside of the neck (35) of the container (36), the first engagement portion and the second engagement portion extending from the top wall (17') at diametrically disposed positions near the rim of the top wall (17').

2. A dispensing device (1') according to claim 1, wherein the engagement portions are provided with projections (37) that are dimensioned and located to engage a top portion of a shoulder (38) of a container (36).

3. A dispensing device (1') according to claim 1 or 2, wherein the sloping inlet barrier wall (14') and inner surfaces of the neck (35) of the container (36) define an inlet chamber.

4. A dispensing device (1') according to claim 3, wherein an inlet barrier aperture is defined between the inlet chamber and a barrier or overflow chamber between a free edge of the sloping inlet barrier wall (14') and the top wall (17').

5. A dispensing device (1') according to any of the preceding claims, wherein the outlet barrier wall (15') and the sloping inner barrier wall (14') define a barrier or overflow chamber.

6. A dispensing device (1') according to any of the preceding claims, further comprising a bottom wall (12'), wherein the sloping inlet barrier wall (14') extends from the bottom wall (12').

## Patentansprüche

1. Dosiergerät (1') zur Mengendosierung eines körnigen Materials, wie z.B. gemahlener Kaffee, gefriergetrockneter Kaffee, Zucker, Waschpulver und dergleichen, aus einem handgehaltenen Behälter (36), wobei das Dosiergerät (1') zum Einsetzen in den Hals (35) eines Behälters (36) vorgesehen ist und Folgendes aufweist:
- eine obere Wand (17'),
- eine Auslasssperrwand (15'), die von der oberen Wand (17') vorsteht, und
- eine geneigte Einlasssperrwand (14'), die gemeinsam Einlass- und Auslassöffnungen definieren,
**dadurch gekennzeichnet, dass** das Dosiergerät (1') eine erste Eingriffportion und eine zweite Eingriffportion aufweist, die je einen Eingriff zwischen dem Dosiergerät (1') und der Innenseite vom Hals des Behälters (36) vorsehen, wobei die erste Eingriffportion und die zweite Eingriffportion in diametral gegenüberliegenden Positionen nahe der Kante der oberen Wand (17') von der oberen Wand (17') vorstehen.

2. Dosiergerät (1') nach Anspruch 1, in dem die Eingriffportionen mit Vorsprüngen (37) versehen sind, die zum Eingriff mit einem oberen Teil einer Schulter (38) eines Behälters (36) abgemessen und angebracht sind.

3. Dosiergerät (1') nach Anspruch 1 oder 2, in dem die geneigte Einlasssperrwand (14') und innere Oberflächen vom Hals (35) des Behälters (36) eine Einlasskammer begrenzen.

4. Dosiergerät (1') nach Anspruch 3, in dem eine Einlasssperröffnung zwischen der Einlasskammer und einer Sperre oder Überlaufkammer zwischen einer freien Kante der geneigten Einlasssperrwand (14') und der oberen Wand (17') begrenzt ist.

5. Dosiergerät (1') nach jedem der vorhergehenden Ansprüche, in dem die Auslasssperrwand (15') und die geneigte Einlasssperrwand (14') eine Sperre oder eine Überlaufkammer begrenzen.

6. Dosiergerät (1') nach jedem der vorhergehenden Ansprüche, das zusätzlich eine untere Wand (12') aufweist,
wobei die geneigte Einlasssperrwand (14') von der unteren Wand (12') vorsteht.

## Revendications

1. Distributeur (1') pour distribuer par lots une matière granuleuse telle que du café moulu, du café instantané lyophilisé, du sucre, de la poudre détergente ou équivalent à partir d'un conteneur portable (36), le distributeur (1') étant adapté pour être inséré à l'intérieur du goulot (35) d'un conteneur (36), le distributeur (1') comprenant:
- une paroi supérieure (17'),
- une paroi de barrage de sortie (15') faisant saillie à partir de la paroi supérieure (17'), et
- une paroi inclinée de barrage d'entrée (14'), définissant ensemble des ouvertures d'entrée et de sortie,
**caractérisé en ce que** le distributeur (1') comprend une première partie pour engagement et une seconde partie pour engagement, chaque partie pour engagement permettant l'engagement du distributeur (1') avec l'intérieur du goulot (35) du conteneur (36), la première partie pour engagement et la seconde partie pour engagement s'étendant à partir de la paroi supérieure (17') dans des positions disposées diamétralement près du bord de la paroi supérieure (17').

2. Le distributeur (1') selon la revendication 1, dans lequel les parties pour engagement sont pourvues de projections (37) qui sont dimensionnées et positionnées pour engager une partie supérieure d'un épaulement (38) d'un conteneur (36).

3. Le distributeur (1') selon la revendication 1 ou 2, dans lequel la paroi inclinée de barrage d'entrée (14') et des surfaces intérieures du goulot (35) du conteneur (36) définissent une chambre d'entrée.

4. Le distributeur (1') selon la revendication 3, dans lequel une ouverture de barrage d'entrée est définie entre la chambre d'entrée et une chambre de barrage ou de trop-plein entre un bord libre de la paroi inclinée de barrage d'entrée (14') et la paroi supérieure (17').

5. Le distributeur (1') selon l'une quelconque des revendications précédentes, dans lequel la paroi de barrage de sortie (15') et la paroi inclinée de barrage d'entrée (14') définissent une chambre de barrage ou de trop-plein.

6. Le distributeur (1') selon l'une quelconque des revendications précédentes, comprenant en outre une paroi inférieure (12'), la paroi inclinée de barrage d'entrée (14') s'étendant à partir de la paroi inférieure (12').
